Europäisches Patentamt

European Patent Office

Office européen des brevets

(11) Numéro de publication: **0 087 345**
**B1**

(19)

(12) **FASCICULE DE BREVET EUROPEEN**

(45) Date de publication du fascicule du brevet: **01.04.87**

(21) Numéro de dépôt: **83400259.4**

(22) Date de dépôt: **07.02.83**

(51) Int. Cl.⁴: **H 02 N 15/02, H 05 B 6/02, C 21 D 9/56**

(54) **Procédé et dispositifs pour minimiser la puissance induite dans un produit plat conducteur maintenu électromagnétiquement sans contact.**

(30) Priorité: **18.02.82 FR 8202679**

(43) Date de publication de la demande:
**31.08.83 Bulletin 83/35**

(45) Mention de la délivrance du brevet:
**01.04.87 Bulletin 87/14**

(84) Etats contractants désignés:
**BE CH DE GB IT LI LU**

(56) Documents cités:
**DE-A-2 609 978**
**DE-C- 903 847**
**FR-A-1 389 902**
**FR-A-1 576 364**
**US-A-4 122 321**

(73) Titulaire: **ALSTHOM**
**38, avenue Kléber**
**F-75784 Paris Cédex 16 (FR)**

(72) Inventeur: **Bronner, Jean-Claude**
**28, Boulevard Bellerive**
**F-95505 Rueil-Malmaison (FR)**

(74) Mandataire: **Weinmiller, Jürgen et al**
**Lennéstrasse 9 Postfach 24**
**D-8133 Feldafing (DE)**

EP 0 087 345 B1

Courier Press, Leamington Spa, England.

## Description

La présente invention se rapporte à un procédé et à des dispositifs de mise en oeuvre de ce procédé permettant de réduire, à son minimum, la puissance induite dans un produit plat conducteur à l'arrêt ou en défilement, puissance liée à la création de forces électromagnétiques aux fins d'un maintien en position sans contact, notamment par guidage ou lévitation. Un tel procédé est connu, par exemple à partir du document FR—A—1 389 902.

Cette invention s'applique notamment à des opérations de parachèvement telles que des traitements thermiques et, en général, dès qu'il est nécessaire de déplacer ou de maintenir des produits sans contact et sans échauffement.

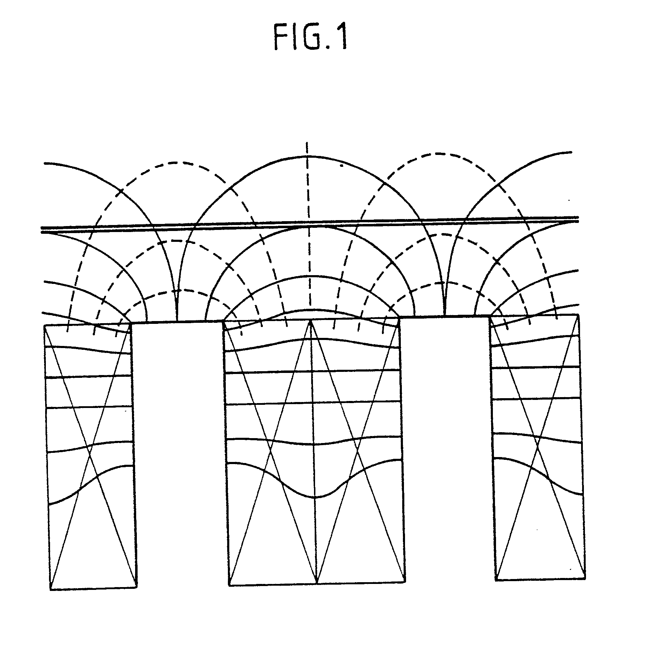

Les procédés et les dispositifs connus visés ci-dessus présentent l'inconvénient d'entraîner un échauffement non négligeable. Ils comprennent généralement un seul inducteur disposé sous le produit à déplacer ou à maintenir sans contact (voir la figure 1 des dessins annexés), l'intensité et la fréquence du champ magnétique étant adaptées aux caractéristiques physiques et aux dimensions du produit.

Le procédé, objet de la présente invention, permet de réduire considérablement l'échauffement induit dans un produit plat conducteur à l'arrêt ou en défilement, échauffement dû à la création de forces électromagnétiques aux fins d'un maintien en position sans contact, notamment par guidage ou lévitation.

Ce procédé consiste à opposer dans certaines zones du produit plat et perpendiculairement à la surface correspondante de celles-ci, deux flux magnétiques alternatifs sensiblement équivalents de sorte que dans chacune de ces zones, le produit étant en position d'équilibre, la composante du champ résultant perpendiculaire à chaque zone soit minimale et que les composantes parallèles à chaque zone soient maximales, grâce à une déviation des deux flux.

Un dispositif de mise en oeuvre du procédé comporte essentiellement pour chaque zone dans laquelle on induit les forces électromagnétiques au moins une paire d'inducteurs, à plusieurs pôles, dont les surfaces polaires sont sensiblement parallèles au produit, les deux inducteurs de la paire étant disposés de façon sensiblement symétrique par rapport à la surface de la zone correspondant à la position d'équilibre recherchée, les pôles se faisant face deux à deux de part et d'autre du produit sont maintenus à tout instant de même polarité, les flux les traversant étant sensiblement de même grandeur.

Dans une forme de réalisation particulièrement bien adaptée mais non exclusivement à un traitement de bande, chacun des inducteurs est constitué par des pôles successifs de forme allongée qui sont alternativement Nord et Sud à un instant donné.

Dans une autre forme de réalisation particulièrement bien adaptée mais non exclusivement à un traitement de tôle ou de plaque, chacun des inducteurs est consitutué de pôles identiques disposés régulièrement suivant un même pas polaire dans deux directions orthogonales. Dans chacune de ces directions à chaque instant, les pôles successifs sont alternativement Nord et Sud.

D'autres caractéristiques et avantages de la présente invention ressortiront de la description qui va suivre faite en regard des dessins annexé sur lesquels:

la figure 1 est une vue en élévation d'un dispositif connu de lévitation électromagnétique de produits plats conducteurs comprenant un seul inducteur disposé sous le produit à léviter;

la figure 2 est une vue en élévation d'un dispositif, selon l'invention, de lévitation électromagnetique de produits plats conducteurs;

la figure 3 est une vue en plan d'une forme de réalisation de l'un des deux inducteurs d'un dispositif selon l'invention, adapté à un traitement de bandes; et

la figure 4 est une vue en plan d'une forme de réalisation de l'un des deux inducteurs d'un dispositif selon l'invention, adapté à un traitement de tôles ou de plaques.

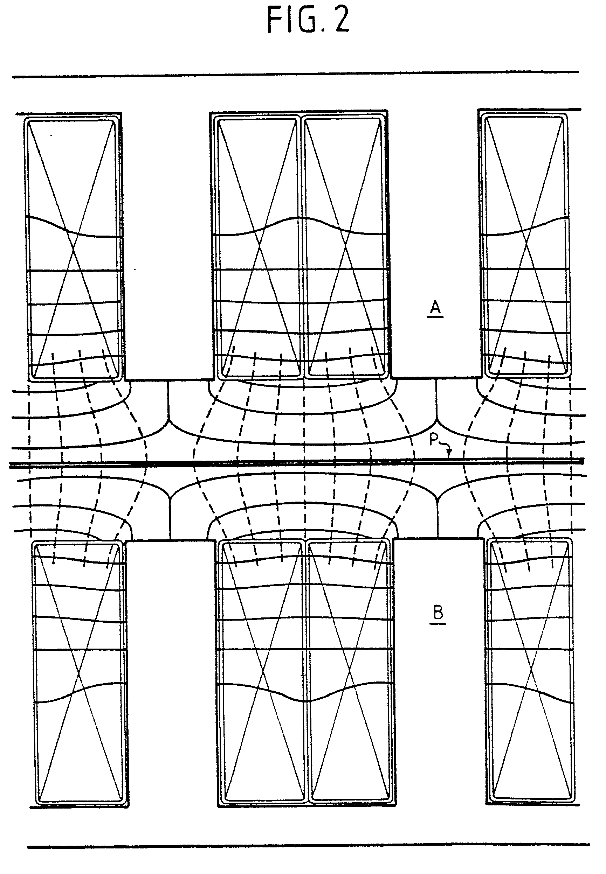

Dans la forme de réalisation représentée à la figure 2 un dispositif de lévitation électromagnétique de produits plats conducteurs est constitué par une paire d'inducteurs horizontaux sensiblement identiques (A) et (B) se faisant face, disposés de part et d'autre du produit (P) et comportant plusieurs pôles, successivement Nord et Sud à un instant donné. Les pôles deux à deux identiques se faisant face sont à toute instant de même polarité.

Les deux flux magnétiques alternatifs sensiblement équivalents qui sont obtenus dans la zone de lévitation du produit sont opposés et donc se dévient mutuellement, la composante du champ résultant qui est perpendiculaire au produit est minimale alors que les composantes parallèles au produit sont maximales.

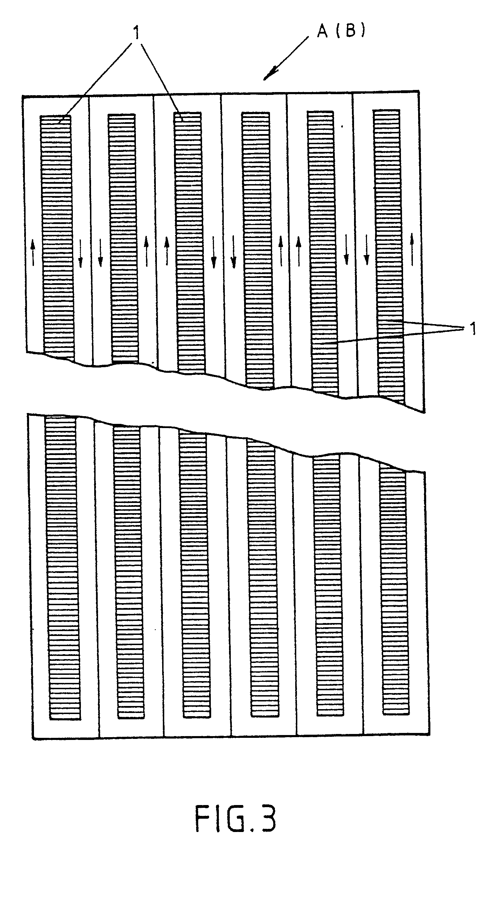

Dans la forme de réalisation de l'invention représentée à la figure 3, plus particulièrement mais non exclusivement adaptée au traitement de bandes, chacun des inducteurs est constitué par des pôles successifs (1) de forme allongée qui sont successivement Nord et Sud à un instant donné.

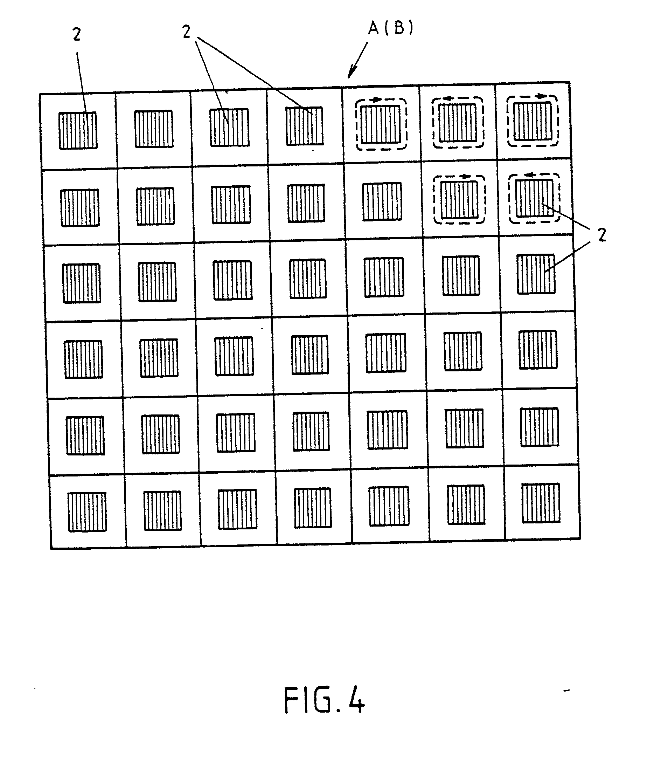

Dans la forme de réalisation, dont la figure 4 est un cas particulier, adaptée plus particulièrement mais non exclusivement à un traitement de tôles ou de plaques, chacun des inducteurs est constitué de plusieurs pôles (2) identiques dont les dimensions principales de la section sont du même ordre de grandeur, disposés régulièrement dans deux directions différentes. Dans chacune de ces directions, les pôles consécutifs sont successivement Nord et Sud, à un instant donné.

Bien entendu l'invention s'applique dans le cas où l'on veut créer des forces d'intensités différentes selon les zones du produit, par des réglages indépendants de la grandeur des flux dans chacune de ces zones, par exemple pour maintenir en position des produits soumis à des jets divers de fluides ou à la gravité.

A partir des formes de réalisation décrites précédemment, ou déduit aisément des configurations de dispositifs dont la géométrie des surfaces polaires sont adaptées à des produits dont la surface n'est pas nécessairement plane, par exemple courbe, cylindrique ou ondulée.

Par ailleurs les zones d'action peuvent concerner tout ou partie du produit.

Les précédents dispositifs ont été décrits avec une utilisation de courant monophasé, mais des dispositifs utilisant des courants polyphasés entrent également dans le cadre de l'invention.

## Revendications

1. Procédé pour minimiser la puissance induite dans un produit plat conducteur à l'arrêt ou en défilement, puissance liée à la création de forces électromagnétiques aux fins d'un maintien en position sans contact, caractérisé en ce que l'on oppose dans certaines zones du produit et perpendiculairement à la surface correspondante de celles-ci, deux flux magnétiques alternatifs sensiblement équivalents de sorte que, dans chacune de ces zones, le produit étant en position d'équilibre, les flux se déviant mutuellement, la composante du champ résultant perpendiculaire à chaque zone soit minimale et que les composantes parallèles à chaque zone soient maximales grâce à la déviation des deux flux.

2. Dispositif pour minimiser la puissance induite dans un produit plat conducteur, suivant le procédé de la revendication 1, caractérisé en ce qu'il comporte pour chaque zone dans laquelle on induit les forces électromagnétiques au moins une paire d'inducteurs, à plusieurs pôles, dont les surfaces polaires sont sensiblement parallèles au produit, les deux inducteurs de la paire étant disposés de façon sensiblement symétrique par rapport à la surface de la zone correspondant à la position d'équilibre recherchée, les pôles se faisant face deux à deux de part et d'autre du produit et etant maintenus à tout instant de même polarité, les flux les traversant étant sensiblement de même grandeur.

3. Dispositif selon la revendication 2, caractérisé en ce que les grandeurs des flux de chaque paire d'inducteurs agissant sur les différentes zones sont réglables indépendamment pour obtenir des forces d'intensité différentes dans chacune des zones correspondantes du produit.

4. Dispositif pour minimiser la puissance induite dans un produit plat conducteur en lévitation électromagnétique, selon la revendication 2, caractérisé en ce qu'il est constitué par au moins une paire d'inducteurs horizontaux sensiblement identiques (A) et (B), disposés de part et d'autre du produit (P), les pôles successifs étant alternativement Nord et Sud à un instant donné.

5. Dispositif selon l'une quelconque des revendications 2 à 4, caractérisé en ce que chacun des inducteurs est constitué par des pôles (1) de forme allongée, le dispositif étant alors plus particulièrement mais non exclusivement adapté au traitement de produits en bande.

6. Dispositif selon l'une quelconque des revendications 2 à 4, caractérisé en ce que chacun des inducteurs est constitué par des pôles (2) sont les dimensions principales de la section sont du même ordre de grandeur, disposés régulièrement dans deux directions différentes, le dispositif étant alors plus particulièrement mais non exclusivement adapté au traitement du produits en plaque.

7. Dispositif selon la revendication 2, caractérisé en ce que la géométrie des surfaces polaires des paires d'inducteurs est adaptée à des produits de surface courbe.

8. Dispositif selon la revendication 2, caractérisé en ce que les zones dans lesquelles on induit les forces électromagnétiques constituent l'ensemble du produit.

## Patentansprüche

1. Verfahren zur Verringerung der in einem flachen umbewegten oder kontinuierlich durchlaufenden elektrisch leitenden Gut induzierten Leistung, die mit der Erzeugung elektromagnetischer Kräfte verbunden ist, um das Produkt berührungsfrei in Schwebe zu halten, dadurch gekennzeichnet, daß man in gewissen Zonen des Guts und senkrecht zur entsprechenden Oberfläche dieser Zonen zwei einander entgegengriechtete, im wesentlichen äquivalente magnetische Wechselflüsse erzeugt, derart, daß in jeder dieser Zonen im Gleichgewichtszustand des Guts und unter gegenseitiger Ablenkung der Flüsse die zu jeder Zone senkrechte Komponente des resultierenden Felds einen Mindestwert annimmt und die zu jeder Zone parallelen Komponenten aufgrund der Ablenkung der beiden Flüsse einen Höchstwert annehmen.

2. Vorrichtung zur Verringerung der in einem flachen elektrisch leitenden Gut induzierten Leistung gemäß dem Verfahren nach Anspruch 1, dadurch gekennzeichnet, daß sie für jede Zone, in der die elektromagnetischen Kräfte induziert werden, mindestens eine Paar von mehrpoligen Induktoren vorgesehen ist, deren Polflächen im wesentlichen parallel zum Gut verlaufen, wobei die beiden Induktoren des Paares im wesentlichen symmetrisch bezüglich der Oberfläche der entsprechenden Zone in der gewünschten Gleichgewichtsposition verlaufen und die Pole paarweise zu beiden Seiten des Guts einander gegenüberliegen und in jedem Augenblick gleiche Polarität besitzen, und wobei die sie durchquerenden Flüsse im wesentlichen gleichen Wert aufweisen.

3. Vorrichtung nach Anspruch 2, dadurch gekennzeichnet, daß die Werte der Flüsse jedes Paars von Induktoren, die auf die verschiedenen Zonen einwirken, unabhängig voneinander einstellbar sind, um unterschiedliche Intensitätskräfte in jeder der entsprechenden Zonen des Guts zu erzielen.

4. Vorrichtung zur Verringerung der ein einem elektrisch leitenden und durch elektromagnetische Kräfte im Schwebezustand gehalten flachen Gut induzierten Leistung nach Anspruch 2, dadurch gekennziechnet, daß sie aus mindestens einem Paar von horizontalen, im wesentlichen gleichen Induktoren (A) und (B) besteht, die zu beiden Sieten des Guts (P) angeordnet sind, wobei die aufeinanderfolgenden Pole in einem gegebenen Zeitpunkt abwechselnd Nordpole und Südpole sind.

5. Vorrichtung nach einem beliebigen der Ansprüche 2 bis 4, dadurch gekennzeichnet, daß jeder der Induktoren aus Polen länglicher Form (1) besteht, so daß die Vorrichtung insbesondere, aber nicht ausschließlich, zur Behandlung von bandförmigem Gut geeignet ist.

6. Vorrichtung nach einem beliebigen der Ansprüche 2 bis 4, dadurch gekennzeichnet, daß jeder der Induktoren aus Polen (2) besteht, deren Hauptquerschnittsabmessungen in derselben Größenordnung liegen und die regelmäßig in zwei unterschiedlichen Richtungen angeordnet sind, so daß die Vorrichtung insbesondere, aber nicht ausschließlich, zur Behandlung von plattenförmigem Gut geeignet ist.

7. Vorrichtung nach Anspruch 2, dadurch gekennzeichnet, daß die Geometrie der Poloberflächen der Induktorpaare an ein Gut mit gekrümmter Oberfläche angepaßt ist.

8. Vorrichtung nach Anspruch 2, dadurch gekennzeichnet, daß die Zonen, in denen die elektromagnetischen Kräfte induziert werden, die Gesamtheit des Guts bilden.

**Claims**

1. A method for minimizing the power induced in a stationary or moving flat and conductive product, power which is caused by the generation of electromagnetic forces intended to maintain the product in position without contact, characterized in that in certain zones of the product and perpendicularly to the corresponding surface thereof, two substantially equivalent alternative magnetic fluxes are opposed in such a way that in each one of these zones, the product being in a position of equilibrium, the fluxes deviating each other, the component of the resulting field perpendicular to each zone is at a minimum and the component parallel to each zone is at a maximum due to the deviation of the two fluxes.

2. A device for minimizing the power induced in a flat conductive product according to the method as claimed in claim 1, characterized in that in each zone in which electromagnetic forces are induced, at least one pair of inductors having a plurality of poles is provided, the polar surfaces of which are substantially parallel to the product, the two inductors of the pair being disposed in a substantially symmetric way with respect to the surface of the corresponding zone in the desired position of equilibrium, the poles facing each other on either side of the product and being maintained at any moment at the same polarity, the fluxes passing therethrough being substantially of the same magnitude.

3. A device according to claim 2, characterized in that the magnitudes of the fluxes of each pair of inductors acting on the different zones are independently adjustable in order to obtain different intensity forces in each of the corresponding zones of the product.

4. A device for minimizing the power induced in a flat conductive product in electromagnetic levitation according to claim 2, characterized in that it is constituted by at least one pair of substantially identical horizontal inductors (A) and (B) disposed on either side of the product (P), the succesive poles being at any given moment alternatingly north and south.

5. A device according to any one of claims 2 to 4, characterized in that each one of the inductors is constituted by poles (1) of an elongated shape, the device thus being particularly, but not exclusively, suitable for the treatment of strip-shaped products.

6. A device according to any one of claims 2 to 4, characterized in that each one of the inductors is constituted by poles (2), the principal cross-sectional dimensions of which are of the same order of magnitude, the poles being regularly disposed along two different directions, the device thus being particularly, but not exclusively, suitable for the treatment of products in the form of plates.

7. A device according to claim 2, characterized in that the geometry of the polar surfaces of the inductor pairs is adapted to products with curved surfaces.

8. A device according to claim 2, characterized in that the zones in which the electromagnetic forces are induced constitute the entirety of the product.

# FIG.1

# FIG. 2

FIG.3

FIG.4